# EUROPÄISCHE PATENTANMELDUNG

(11) **EP 2 034 246 A2**
(43) Veröffentlichungstag der Anmeldung: **11.03.2009**
(21) Anmeldenummer: 08014878.6
(22) Anmeldetag: 22.08.2008
(51) Int. Cl.: F24D 19/10

(54) **Verfahren zur regelung eines Heizkörpers, Regeleinrichtung, Heizeinrichtung und Heizsystem**

(30) Priorität: 06.09.2007 DE 102007042474
(71) Anmelder: Robert Bosch GmbH, 70442 Stuttgart (DE)
(72) Erfinder: Günther, Clemens, 76275 Ettlingen (DE); Spreizer, Karsten, Dr., 71636 Ludwigsburg (DE)

(57) **Zusammenfassung**

Die Erfindung betrifft ein Verfahren zur Regelung mindestens eines Heizkörpers (3) für mindestens eine begrenzte, zu erwärmende Umgebung (W). Weiter betrifft die Erfindung eine Regeleinrichtung zur Regelung eines Heizkörpers (3). Darüber hinaus betrifft die Erfindung eine Heizeinrichtung (2) zum Heizen einer Umgebung (W). Nicht zuletzt betrifft die Erfindung ein Heizsystem (1) zum Heizen einer Umgebung (W).

Es ist eine Aufgabe der Erfindung, eine verbesserte Beheizung für einen begrenzten Raum (4) wie Wohnungen und dergleichen bereitzustellen, wobei die Beheizung subjektgesteuert ist. Insbesondere ist es eine Aufgabe der Erfindung, eine schnell reagierende Beheizung subjektbezogen zu realisieren.

Gekennzeichnet ist das Verfahren dadurch, dass eine Präsenz eines Subjektes (5) in der zu erwärmenden Umgebung (W) erfasst wird und die Abgabe mindestens eines Parameters der Wärme in Abhängigkeit von der Präsenz des Subjektes (5) durchgeführt wird. Gekennzeichnet ist die Regeleinrichtung dadurch, dass diese mit einem Präsenzsensor (9) zur Erfassung eines Subjektes (5) und einem Regler zum Regeln einer Abgabe von Wärme in Abhängigkeit von der Präsenz des Subjektes (5) ausgestattet ist. Die Heizeinrichtung (2) ist dadurch gekennzeichnet, dass diese mit einem Heizkörper (3) und mindestens einer erfindungsgemäßen Regeleinrichtung ausgestattet ist. Das Heizsystem (1) ist dadurch gekennzeichnet, dass das Heizsystem (1) mit einer Zentralheizung (7), einem Verteilungsnetz (6) und mindestens einer an das Verteilungsnetz (6) angeschlossenen erfindungsgemäßen Heizeinrichtung (2) ausgestattet ist.

## Beschreibung

Die Erfindung betrifft ein Verfahren zur Regelung mindestens eines Heizkörpers für mindestens eine begrenzte, zu erwärmende Umgebung. Weiter betrifft die Erfindung eine Regeleinrichtung zur Regelung eines Heizkörpers. Darüber hinaus betrifft die Erfindung eine Heizeinrichtung zum Heizen einer Umgebung. Nicht zuletzt betrifft die Erfindung ein Heizsystem zum Heizen einer Umgebung.

Zum Heizen einer begrenzten, zu erwärmenden Umgebung wie Wohnhäusern, Wohnräumen und dergleichen sind Warmwasser-Zentralheizungen etc. allgemein bekannt. Diese erhitzen durch Verbrennung meist fossiler Brennstoffe einen in einem Kreislauf befindlichen Wärmeträger, in der Regel Wasser, und verteilen die Wärme mittels des Wärmeträgers über ein Rohrleitungssystem an verschiedene Übergabestellen wie Radiatoren, Fußbodenheizungen oder Ähnliches, wo die Wärme durch Konvektion an die Umgebungs- oder Raumluft abgegeben wird. Zur Regelung eines Wärmebedarfs wird zum Beispiel eine aktuelle Außentemperatur oder die Umgebungstemperatur in einem Referenzraum gemessen. Anhand dieser Messwerte ermittelt eine Heizungsregelung einen erforderlichen Vorlauftemperatur-Sollwert. Basierend auf diesem Sollwert wird zum Beispiel eine Feuerungsleistung der Warmwasser-Zentralheizung geregelt.

Derartige Warmwasser-Zentralheizungen reagieren relativ träge hinsichtlich ihres zeitlichen Verhaltens. Aufgrund zum Teil langer Transportwege durch die Rohrleitungen kann nur langsam auf Änderungen hinsichtlich des Wärmebedarfs reagiert werden, wodurch es zu einem hohen Energieverbrauch kommen kann, wenn zum Beispiel ein gesamtes Umgebungsluftvolumen einer Umgebung aufgeheizt werden soll. Wenn sich nur wenige Subjekte, wie Personen, Tiere, Pflanzen und dergleichen, kurzfristig in der Umgebung aufhalten, ist eine solche Aufheizung uneffektiv. Da zudem die Wärme zentral erzeugt und dann anschließend an Verbrauchsstellen in einem Heiznetz verteilt wird, entstehen aufgrund dieser uneffektiven Beheizung zusätzliche Energieverluste. Hinzu kommt, dass bei einer derartigen Zentralheizung nur die Vorgabe des Wärmebedarfs für eine begrenzte Umgebung, beispielsweise einen Raum vorgebbar ist, nicht jedoch der Wärmebedarf eines einzelnen Subjektes.

Der Erfindung liegt die Aufgabe zugrunde, eine verbesserte Beheizung für einen begrenzten Raum wie Wohnungen und dergleichen bereitzustellen, wobei die Beheizung subjektgesteuert ist. Insbesondere ist es eine Aufgabe der Erfindung, eine schnell reagierende Beheizung subjektbezogen zu realisieren.

Erfindungsgemäß wird dies mit den Merkmalen der Patentansprüche 1, 3, 4 und 9 gelöst. Vorteilhafte Weiterbildungen sind den Unteransprüchen zu entnehmen.

Das Verfahren zur Regelung mindestens eines Heizkörpers für mindestens eine begrenzte, zu erwärmende Umgebung umfassend die Schritte: Bereitstellen von Wärme an dem mindestens einen Heizkörper und Abgabe der Wärme von dem Heizkörper an die Umgebung ist dadurch gekennzeichnet, dass eine Präsenz eines Subjektes in der zu erwärmenden Umgebung erfasst wird und die Abgabe mindestens eines Parameters der Wärme, wie Richtung, Stärke etc., in Abhängigkeit von der Präsenz des Subjektes durchgeführt wird. Die begrenzte, zu erwärmende Umgebung kann zum Beispiel ein Gebäude, eine Wohnung, ein Wohnhaus, ein Zimmer und dergleichen sein. Das Bereitstellen von Wärme kann mittels Wärmeträgermedien wie Wasser und dergleichen, aber auch elektrisch oder gasbetrieben erfolgen. Das Erfassen der Präsenz umfasst zum Beispiel das Erfassen der Größe, der Bewegung, der Geschwindigkeit, der Beschleunigung, der Position und dergleichen. Bei dem Subjekt kann es sich um alle möglichen Subjekte wie Menschen, Pflanzen, Tiere, Gegenstände handeln, wobei bevorzugt das Subjekt ein Mensch sein kann. Die Abgabe mindestens eines Parameters der Wärme umfasst alle beliebigen Wärmeenergieparameter wie Richtung, Wärmemenge, Temperatur und dergleichen. Das Verfahren regelt die Wärmeabgabe so, dass sofort die Wärmeabgabe gestartet wird, wenn eine Person die begrenzte Umgebung betritt. Betreten mehrere Subjekte einen Raum oder befinden sich mehrere Subjekte in dem Raum, wird die Wärmeabgabe solange durchgeführt, bis das letzte Subjekt den Raum wieder verlassen hat, oder beispielsweise ein Signal zur Wärmeabgabeunterbrechung gesendet wird. Dies kann zum Beispiel nachts, wenn die Person schläft, der Fall sein, oder aber, wenn zum Beispiel der Raum durch Öffnen von Fenstern gelüftet wird.

In einer Ausführungsform des Verfahrens ist vorgesehen, dass die Abgabe der Wärme im Wesentlichen auf das Subjekt gerichtet durchgeführt wird, um eine das Subjekt lokal umgebende Behaglichkeitszone auszubilden. Diese Behaglichkeitszone kann beispielsweise als eine das Subjekt umhüllende Zone betrachtet werden, welche einen vorgebbaren Maximalabstand zu dem Subjekt, beispielsweise die Umgebung mit einem Radius von 1 m, aufweist. Innerhalb dieser Behaglichkeitszone wird zum Beispiel eine vorgebbare Temperatur realisiert, welche nur Abweichungen in einem geringen Toleranzbereich zulässt. Außerhalb dieser Behaglichkeitszone kann die Temperatur dann stark von der vorgebbaren Temperatur abweichen.

Die Regeleinrichtung zur Regelung eines Heizkörpers für eine begrenzte, zu erwärmende Umgebung gemäß dem erfindungsgemäßen Verfahren ist dadurch gekennzeichnet, dass diese mit mindestens einem Präsenzsensor zur Erfassung einer Präsenz eines Subjektes in der Umgebung und einem Regler zum Regeln einer Abgabe von Wärme eines Heizkörpers in Abhängigkeit von der Präsenz des Subjektes ausgestattet ist. Über den Präsenzsensor wird die Präsenz, die Position, die Bewegung und dergleichen erfasst. In Abhängigkeit von dem erfassten Wert wird die Wärmeabgabe geregelt. Die Regelung erfolgt so, dass das Subjekt eine Behaglichkeitszone mit voreingestellten Parametern, wie zum Beispiel eine vorgebbare Temperatur, umgibt.

Die Heizeinrichtung zum Heizen einer begrenzten, zu erwärmenden Umgebung ist dadurch gekennzeichnet, dass die Heizeinrichtung mit mindestens einem Heizkörper, an welchem Wärme bereitgestellt ist, und mindestens einer erfindungsgemäßen Regeleinrichtung ausgestattet ist. Es können mehrere Heizkörper vorgesehen sein. Es kann für jeden Heizkörper eine Regeleinrichtung vorgesehen sein. Alternativ kann zum Beispiel eine Zentralregeleinrichtung vorgesehen sein.

Ein Ausführungsbeispiel sieht vor, dass der mindestens eine Heizkörper so ausgebildet ist, dass dieser Wärme gerichtet auf das Subjekt abgibt, um eine das Subjekt lokal umgebende Behaglichkeitszone zu schaffen. Die Behaglichkeitszone ist lokal auf das Subjekt gerichtet und bewegt sich entsprechend mit dem Subjekt mit. Dadurch wird ein unnötiges Erwärmen einer Umgebung, in welcher sich das Subjekt nicht befindet, verhindert.

Eine weitere Ausführungsform sieht vor, dass der Heizkörper als Wärmestrahler ausgebildet ist, welcher Wärme in Form von Strahlung abgibt. Noch eine weitere Ausführungsform sieht vor, dass die Regeleinrichtung eine Positionsveränderung des Subjektes erfasst und der Heizkörper Wärmemittel aufweist, um die bereitgestellte Wärme dem Subjekt folgend abzugeben. Darüber hinaus sieht ein Ausführungsbeispiel vor, dass die Wärmemittel mindestens einen Verteilermechanismus wie ein Mikrospiegelsystem umfassen, um Wärme in die Behaglichkeitszone abzugeben.

Das Heizsystem zum Heizen mindestens einer begrenzten, zu erwärmenden Umgebung, ist dadurch gekennzeichnet, dass das Heizsystem mit einer Zentralheizung, welche zentral Wärme bereitstellt, einem Verteilungsnetz zur Verteilung der zentral bereitgestellten Wärme und mindestens einer an das Verteilungsnetz angeschlossenen erfindungsgemäßen Heizeinrichtung ausgestattet ist.

In einer Ausführungsform ist vorgesehen, dass die Heizeinrichtung mehrere lokal verteilte Wärmestrahler umfasst, welche subjektfolgend einzeln betreibbar sind, so dass das Subjekt stets eine wärmende Behaglichkeitszone auch bei einer Bewegung in unterschiedliche Bereiche der Umgebung umgibt.

Durch ein erfindungsgemäßes Heizungssystem lässt sich eine begrenzte Umgebung, beispielsweise ein Wohnhaus, so ausstatten, dass energiesparend ein Subjekt oder mehrere Subjekte stets eine vorgebbare Behaglichkeitszone innerhalb des Hauses umgibt. Das Haus kann in mehrere Räume unterteilt sein und die Räume können jeweils mehrere Heizeinrichtungen aufweisen. Über eine entsprechende Steuerung lässt sich das Heizsystem so programmieren, dass jedes Subjekt seine eigene Behaglichkeitszone umgibt. Jeder Heizkörper kann Wärmemittel aufweisen, welche subjektfolgend die Behaglichkeitszone mit dem Subjekt mitbewegen. Die Wärmeerzeugung erfolgt entsprechend durch mehrere lokale Wärmeerzeuger, die Wärme in Form von Strahlung abgeben. Hierdurch lässt sich eine wesentlich höhere Dynamik erzielen. Die Verteilung oder Abgabe der Wärme auf einzelne Subjekte, wie Personen, ist auf die Subjekte gerichtet möglich. Zudem wird die Wärmeabgabe in Form von Strahlung von Menschen als angenehmer empfunden, als bei einer Erwärmung der Umgebungsluft, beispielsweise durch Konvektion. Die Behaglichkeitszone ist demgemäß verbessert und ist individuell realisierbar.

Die Zeichnungen stellen zwei Ausführungsbeispiele der Erfindung dar. Es zeigt:
- Fig.1: schematisch ein erfindungsgemäßes Heizsystem mit lokalen Heizeinrichtungen und
- Fig.2: schematisch ein erfindungsgemäßes Heizsystem, ausgebildet zum Bereitstellen individueller, subjektfolgender Behaglichkeitszonen.

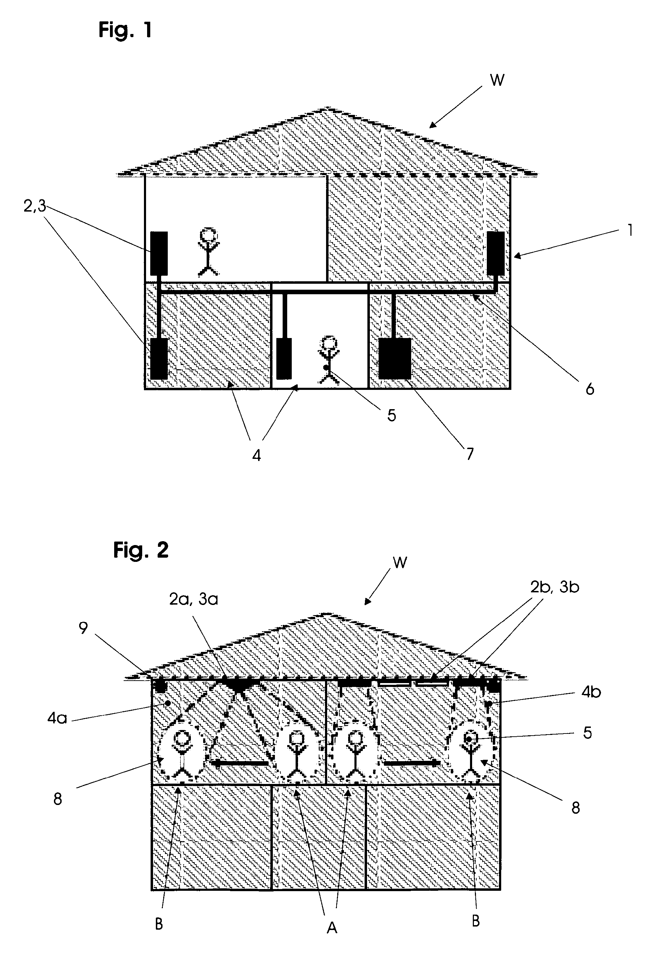

Fig. 1 zeigt schematisch ein Heizsystem 1 mit lokalen Heizeinrichtungen 2 mit jeweils einem Heizkörper 3. Das Heizsystem 1 ist in einer durch Wände begrenzten, als Wohnhaus W mit Wohnräumen 4 ausgebildeten, zu erwärmenden Umgebung angeordnet in welchem Subjekte 5, wie beispielsweise Personen vorhanden sind. Die Heizeinrichtungen 2, genauer die Heizkörper 3 des Heizsystems 1, sind über ein Verteilungsnetz 6 untereinander und mit einer Zentralheizung 7 verbunden. In zwei der Wohnräume 4 ist jeweils ein Subjekt 5, nämlich eine Person, präsent. Die Präsenz der Personen wird erfindungsgemäß durch nicht dargestellte Sensoren detektiert. Dadurch ist es möglich, diese beiden Wohnräume 4 gezielt zu beheizen. Die drei anderen dargestellten Wohnräume 4, in denen keine Personen 5 vorhanden sind, sind nicht beheizt, wie durch die Schraffuren dargestellt. Das Heizsystem 1 weist zum Erkennen, ob eine Person 5 in einem Wohnraum 4 präsent ist, einen Präsenzsensor auf, der hier nicht dargestellt ist. Wird das Vorhandensein einer Person 5 in einem der Wohnräume 4 erfasst, dann wird in diesem Wohnraum 4 Wärme abgegeben und der Wohnraum 4 entsprechend beheizt. Das Heizsystem 1 ist so ausgebildet, dass mehrere Wohnräume 4, in welchem mindestens je eine Person 5 präsent ist, beheizt werden. In Fig. 1 wird jeweils der gesamte Wohnraum 4, in welchem sich eine Person 5 befindet, beheizt. In einer Ausgestaltung können zudem Einrichtungen vorhanden sein, durch welche nicht nur die Präsenz einer Person detektiert wird, sondern auch deren spezielle Eigenheiten und/oder Vorlieben. Dadurch können Behaglichkeitszonen für bestimmte Personen gezielt geschaffen werden.

Fig. 2 zeigt schematisch ein Heizsystem 1, ausgebildet zum Bereitstellen individueller, subjektfolgender Behaglichkeitszonen 8. Das Heizsystem 1 umfasst in einem ersten Wohnraum 4a der Wohnräume 4 einer Umgebung W eine erste lokale Heizeinrichtung 2a mit einem ersten Heizkörper 3a. Weiter ist in dem ersten Wohnraum 4a ein Präsenzsensor 9 angeordnet. Der Präsenzsensor 9 kann zum Beispiel als Infrarotkamera oder dergleichen ausgebildet sein. Dabei erfasst der Präsenzsensor 9 zumindest das Vorhandensein des Subjektes 5, hier einer Person, in dem entsprechenden Wohnraum 4. Weiter kann der Präsenzsensor 9 so ausgebildet sein, dass er Bewegungen, Beschleunigungen, Größe des Subjektes 5 und dergleichen erfasst. Abhängig von dem erfassten Messwert des Präsenzsensors 9 erfolgt die Wärmeabgabe. Sobald eine Person 5 in einem Wohnraum 4 erfasst wird, wird die an dem lokalen Heizkörper 3a bereitgestellte Wärme abgegeben. Die Abgabe der Wärme erfolgt dabei über Wärmestrahlung. Die Wärmestrahlung ist dabei subjektbezogen, das heißt, die Wärmestrahlung ist auf das Subjekt 5 gerichtet. Hierdurch wird die Behaglichkeitszone 8 erzeugt, welche das Subjekt 5 umgibt. Diese das Subjekt 5 einhüllende Behaglichkeitszone 8 füllt nur einen Teilbereich des Wohnraumes 4 aus, so dass durch den kleineren Bereich Energie eingespart werden kann.

Bewegt sich nun die in dem Wohnraum 4 befindliche Person 5 innerhalb des Wohnraums 4, wie zum Beispiel anhand des ersten Wohnraums 4a durch den Pfeil dargestellt, von einer ersten Position A zu einer zweiten Position B, so ist die lokal angeordnete erste Heizeinrichtung 2a so ausgebildet, dass die Behaglichkeitszone 8 mit der Person 5 "mitwandert", das heißt, die Wärmeabgabe wird entsprechend geregelt. Hierzu weist die Heizeinrichtung 2a Wärmemittel auf (hier nicht dargestellt), beispielsweise in Form von Mikrospiegeln oder einem Mikrospiegelsystem, welche die Wärme entsprechend verteilen. Dadurch, dass die Wärmeabgabe über Strahlung erfolgt, kann die Wärmeabgabe schnell und dynamisch erfolgen.

In einem zweiten Wohnraum 4b der Wohnräume 4 sind mehrere lokale Heizeinrichtungen 2b bzw. lokale Heizkörper 3b angeordnet. Diese Heizeinrichtungen 2b sind so ausgebildet, dass diese unabhängig voneinander schaltbar sind. In dem zweiten Wohnraum 4b ist ebenfalls ein Präsenzsensor 9 angeordnet, der ein Subjekt 5 erfasst. Bewegt sich nun die Person 5 von einer ersten Position A zu einer zweiten Position B in dem zweiten Wohnraum 4b, so schalten sich die Heizkörper 3b entsprechend dem Weg der Person 5 an und ab, damit die Person 5 auf deren Weg die Behaglichkeitszone 8 umgibt. Auch diese Heizkörper 3b geben Wärme über Strahlung ab.

Bei diesem erfindungsgemäßen Heizsystem 1 werden nur die Behaglichkeitszonen 8 um die Person 5 erwärmt. Die restlichen Bereiche der Wohnräume 4, in welchen sich keine Personen 5 befinden, werden nicht beheizt, was durch die schraffierten Flächen dargestellt ist. Auf diese Weise lässt sich effizient Energie einsparen.

## Patentansprüche

1. Verfahren zur Regelung mindestens eines Heizkörpers (3) für mindestens eine begrenzte, zu erwärmende Umgebung (W), umfassend die Schritte:
Bereitstellen von Wärme an dem mindestens einem Heizkörper (3) und
Abgabe der Wärme von dem Heizkörper (3) an die Umgebung (W),
**dadurch gekennzeichnet, dass** eine Präsenz eines Subjektes (5) in der zu erwärmenden Umgebung (W) erfasst wird und die Abgabe mindestens eines Parameters der Wärme, wie Richtung, Stärke etc., in Abhängigkeit von der Präsenz des Subjektes (5) durchgeführt wird.

2. Verfahren nach Anspruch 1,
**dadurch gekennzeichnet, dass** die Abgabe der Wärme im Wesentlichen auf das Subjekt (5) gerichtet durchgeführt wird, um eine das Subjekt (5) lokal umgebende Behaglichkeitszone (8) zu schaffen.

3. Regeleinrichtung zur Regelung eines Heizkörpers (3) für eine begrenzte, zu erwärmende Umgebung (W) gemäß dem Verfahren nach Anspruch 1 oder 2,
**dadurch gekennzeichnet, dass** die Regeleinrichtung mit mindestens einem Präsenzsensor (9) zur Erfassung einer Präsenz eines Subjektes (5) in der Umgebung (W) und einem Regler zum Regeln einer Abgabe von Wärme des Heizkörpers (3) in Abhängigkeit von der Präsenz des Subjektes (5) ausgestattet ist.

4. Heizeinrichtung (2) zum Heizen einer begrenzten, zu erwärmenden Umgebung (W),
**dadurch gekennzeichnet, dass** die Heizeinrichtung (2) mit mindestens einem Heizkörper (3), an welchem Wärme bereitgestellt ist und mindestens einer Regeleinrichtung nach Anspruch 3 ausgestattet ist.

5. Heizeinrichtung (2) nach Anspruch 4,
**dadurch gekennzeichnet, dass** der mindestens eine Heizkörper (3) so ausgebildet ist, dass dieser Wärme gerichtet auf das Subjekt (5) abgibt, um eine das Subjekt (5) lokal umgebende Behaglichkeitszone (8) zu schaffen.

6. Heizeinrichtung (2) nach Anspruch 4 oder 5,
**dadurch gekennzeichnet, dass** der Heizkörper (3) als Wärmestrahler ausgebildet ist, welcher Wärme in Form von Strahlung abgibt.

7. Heizeinrichtung (2) nach Anspruch 4 bis 6,
**dadurch gekennzeichnet, dass** die Regeleinrichtung eine Positionsveränderung des Subjektes (5) erfasst und der Heizkörper (3) Wärmemittel aufweist, um die bereitgestellte Wärme dem Subjekt (5) folgend abzugeben.

8. Heizeinrichtung (2) nach Anspruch 4 bis 7,
**dadurch gekennzeichnet, dass** die Wärmemittel mindestens einen Verteilermechanismus wie ein Mikrospiegelsystem umfassen, um Wärme in die Behaglichkeitszone (8) abzugeben.

9. Heizsystem (1) zum Heizen mindestens einer begrenzten, zu erwärmenden Umgebung (W),
**dadurch gekennzeichnet, dass** das Heizsystem (1) mit einer Zentralheizung (7), welche zentral Wärme bereitstellt, einem Verteilungsnetz (6) zur Verteilung der zentral bereitgestellten Wärme und mindestens einer an das Verteilungsnetz (6) angeschlossen Heizeinrichtung (2) nach einem der Ansprüche 4 bis 9 ausgestattet ist.

10. Heizsystem (1) nach Anspruch 9,
**dadurch gekennzeichnet, dass** die Heizeinrichtung (2) mehrere lokal verteilte Wärmestrahler (3a, 3b) umfasst, welche subjektfolgend einzeln betreibbar sind, so dass das Subjekt (5) stets eine wärmende Behaglichkeitszone (8) auch bei einer Bewegung in unterschiedliche Bereiche (A, B) der Umgebung (W) umgibt.
